# EUROPEAN PATENT APPLICATION

(11) **EP 1 739 918 A1**
(43) Date of publication of application: **03.01.2007**
(21) Application number: 05300522.9
(22) Date of filing: 28.06.2005
(51) Int. Cl.: H04L 29/06

(54) **System and method for avoiding error correction redundancy over the last link**

(71) Applicant: Thomson Licensing, 92100 Boulogne-Billancourt (FR)
(72) Inventor: Bichot, Guillaume, 35630, La Chapelle Chaussee (FR)
(74) Representative: Rossmanith, Manfred

(57) **Abstract**

A system and a method for avoiding error correction redundancy over the last link are disclosed. By substituting the end-to-end connection oriented reliable transport protocol with a connection oriented non-reliable transport protocol over the last link, the inherent overhead and extra traffic brought by the recovery mechanism is reduced and side effects introduced by link layer recovery ARQ disappear. A new protocol called TDP is proposed which mimics TCP using a UDP compliant header and adding a connection service. Both the termination equipment protocol stack and the end user equipment protocol stack are simplified.

## Description

### FIELD OF THE INVENTION

The present invention relates generally to data transmission, and particularly to a system and method for avoiding error correction redundancy over the last link.

### BACKGROUND OF THE INVENTION

Conventional systems that perform data transmission typically use a protocol stack to facilitate the data transmission. A protocol stack may include end-to-end transport protocols and link protocols. A link protocol provides mean to carry information over a homogeneous medium. An end-to-end transport protocol carries information over several networks (thus several links) being agnostic regarding each individual link transport protocol. The last link or last hop being also called the access network is the medium and link protocol that inter-connects an end user equipment with a backbone network.

The recovery mechanism as used by the end-to-end transport protocol is useful because a packet going to the end user equipment and crossing several unknown networks can be corrupted or more probably dropped due to congestion phenomena. However, there will be two reliable protocols over the access network one at link level, and the other at transport level. Moreover, the end-to-end transport recovery mechanism will create unwanted redundancy if the packet reaches the last link without any loss. It will be costly not only for the last link but also for the entire networks because ARQ (Automatic Repeat Request) based recovery mechanisms generates overhead and, more important, the two recovery mechanisms (i.e. the one used over the end-to-end transport connection and the other one used over the last link connection) are not synchronized. This means that the recovery process over the last link may generate a useless end-to-end recovery process. This situation is especially unwelcome when the last link or access network is a wireless link.

With the increasing popularity of wireless networks, people realized that the performance of reliable transport protocol in such networks suffers from significant throughput degradation and very high interactive delays. Thus, the need for reducing the traffic and improving the efficiency of the reliable transport protocol over wireless links is growing dramatically.

There are several methods that aim to reduce the traffic over the last link by compressing the packet headers. As in IEEE802.16, since the MAC (Medium Access Control) protocol is connection oriented, both link ends agree on a compressed header that gather header fields for which the values will not change during the connection. Ethernet, IP and even TCP/UDP headers can be compressed. Cellular networks as GSM/GPRS or UMTS recommend the header compression protocols as RFC 2507. However, these methods neither do reduce the traffic inherent to the recovery mechanism as used by the end-to-end transport protocol (ARQ as used by TCP for instance) nor the side effects of losing packets over the last link.

There are several methods attempting to enhance the TCP efficiency over a wireless medium. These methods have been described in "A Comparison of Mechanisms for Improving TCP Performance over Wireless Links" [Hari Balakrishnan, Venkata N. Padmanabhan, Srinivasan Seshan and Randy H. Katz, IEEE/ACM transactions on networking, Vol.5, No. 6, December 1997]. A described method therein splits a TCP connection into two connections: One over the last link (the access network) between the termination equipment and the end user, and the other one over the backbone. This method has an advantage that the last link transport protocol being separated does not influence the end-to-end transport over the backbone. However there is still error recovery redundancy over the last link and this solution is complex to implement.

Accordingly, there remains a need for reducing the inherent overhead and extra traffic brought by the recovery mechanism for some scarce packet losses over the last link.

### SUMMARY OF THE INVENTION

In one aspect of the present invention, a method for avoiding error correction redundancy over the last link during a data transfer between an end user equipment and a remote network equipment is provided. The end user equipment connects to at least one network via a termination equipment, the last link being the last network inter-connects the end user equipment with the termination equipment, the termination equipment and the end user equipment each have at least one application program and at least one connection oriented protocol stack. The method including the steps of: the end user application program invoking the end user equipment to send a connection request to the remote network equipment, wherein the connection request will be intercepted by the termination equipment; responsive to the connection request, the termination equipment setting up a reliable transport protocol connection with the remote network equipment; upon the reliable transport protocol connection being effective with the remote network equipment, the termination equipment sending a confirmation back to the end user equipment using a non-reliable connection transport protocol; responsive to the connection confirmation, the end user equipment sending data using the non-reliable transport protocol to the termination equipment; the termination forwarding the data towards the remote network equipment using the reliable transport protocol; the end user equipment or the remote network equipment terminating the connection by using the corresponding packet exchange according to the connection oriented non-reliable transport protocol or the connection oriented reliable transport protocol respectively.

According to the present invention, the last link could be either a wireless link or a wired link.

According to the present invention, the data transfer is compliant with both the connection oriented reliable transport protocol and the connection oriented non-reliable transport protocol.

According to the present invention, the connection oriented reliable transport protocol may be the Transmission Control Protocol (TCP) and the connection oriented non-reliable transport protocol over the last link is a transport protocol, compliant with the User Datagram Protocol (UDP) further including a connection oriented service.

In another aspect of the present invention, a system for avoiding error correction redundancy during a data transfer over a link between an end user equipment and a remote network equipment is provided. The end user equipment connects to at least one network via the termination equipment, the system including: at least one termination equipment; at least one end user equipment; an access network; wherein the termination equipment having an application program and at least two protocol stacks, wherein the stack for communicating with a plurality of networks side including at least a physical layer, a link layer, an internet protocol(IP) layer, a connection oriented reliable transport protocol layer and the stack for communicating with the end user equipment including at least one physical layer, a link layer, an internet protocol(IP) layer and a connection oriented non-reliable transport protocol layer; the end user equipment having an application program and a connection oriented protocol stack including at least an application layer, an application programming interface (API), a physical layer, a link layer, an IP layer, and a connection oriented non-reliable transport protocol layer; the access network interconnecting the termination equipment and the end user equipment.

According to the present invention, IP addresses and TCP port numbers are valid to the connection oriented non-reliable transport protocol layer.

According to the present invention, the termination equipment communicates with the end user equipment through the connection oriented non-reliable transport protocol used over the access network.

According to the present invention, the end user equipment masks the usage of the connection oriented non-reliable transport protocol into the application layer.

According to the present invention, an end user equipment to be connected to a network is provided. The end user equipment comprises a communication means for communicating with a remote network equipment on the network; a memory, further comprising: an application program for transferring the data to the remote network equipment; a connection-oriented communication mechanism for receiving the data from the application program, and for establishing a non reliable connection to a termination equipment; and a transport layer for transferring the data to the termination equipment; and a processor for running the application program, the connection-oriented communication mechanism, and the transport layer.

According to the present invention, a termination equipment is provided, which comprises: at least one communication means for communicating with a device on the network, said device could be an end user equipment or a remote network device; a memory, further comprising: at least one application program for transferring the data from the end user equipment to the remote network equipment and vice versa; at least one connection-oriented communication mechanism for receiving the data from the application program, for establishing a non reliable connection to the end user equipment, and for relaying the data from the end user equipment to the remote network equipment and vice versa; and a transport layer for transferring the data from the end user equipment to the remote network equipment and vice versa; and a processor for running the at least one application program, the at least one connection-oriented communication mechanism, and the transport layer.

### BRIEF DESCRIPTION OF THE DRAWINGS

Fig. 1 is a flow chart showing a method for avoiding error correction redundancy over the last link during a data transfer between an end user equipment and a remote network equipment according to the present invention;
Fig. 2 is a schematic diagram showing the kernel of the present invention implemented over a simplified network architecture composed with the Internet (that is a set of interconnected networks) interconnected through a gateway (usually owned by an ISP in case of a public network) with a backbone network;
Fig. 3 is a schematic diagram showing TCP to TDP diagram sequence according to the present invention; and
Fig. 4 is a schematic diagram showing the protocol stacks in the termination equipment and in the end user equipment according to the present invention;

### DETAILED DESCRIPTION OF THE PREFERRED EMBODIMENTS

The technical features of the present invention will be described further with reference to the embodiments. The embodiments are only preferable examples without limiting to the present invention. It will be well understood by the following detail description in conjunction with the accompanying drawings.

According to one embodiment of the present invention, an end user equipment connects to a remote network equipment, serving as a WEB server through several network links. The network termination equipment and the end user equipment each having an application program and a protocol stack in which the transport protocol is connection oriented but without recovery mechanism (i.e. unreliable). The termination equipment acts as a transport protocol gateway; it inter-connects the last link transport protocol used between the end user equipment and the termination equipment with the end-to-end transport protocol used between the termination equipment and the remote network equipment (e.g. a WEB server). The termination equipment interconnects the connection oriented non-reliable protocol used over the access network (last link) with the end-to-end connection oriented reliable transport protocol used over the rest of the network between the termination equipment and a remote network equipment. The termination equipment intercepts the non-reliable data packet and forwards it to the remote network equipment according to the reliable transport protocol. The remote network equipment may end the end-to-end connection according to the end-to-end reliable transport protocol. The termination equipment intercepts the incoming request and sends a disconnection request according to the non-reliable last link transport protocol to the end user equipment; the end user equipment sends a disconnection confirmation back to the termination equipment; and responsive to the disconnection confirmation and according to the end-to-end transport protocol, the termination equipment confirms the disconnection to the remote network equipment.

According to one embodiment of the present invention, the end user application layer uses the conventional application programmable interface (API) for requesting the usage of a connection oriented reliable transport protocol wherein the application is indeed transparently associated with a connection oriented non-reliable transport protocol (TDP).

According to the one embodiment of the present invention, the end-to-end connection oriented reliable transport protocol may be the Transmission Control Protocol (TCP as described in RFC:793, Transmission Control Protocol, DARPA internet program protocol specification) and the last link connection oriented non-reliable transport protocol is a transport protocol, compliant with the User Datagram Protocol (UDP as described in RFC 768, User Datagram Protocol) but adding a connection procedure. It is called Transport Datagram Protocol (TDP).

In another aspect of one embodiment of the present invention, a system for avoiding error correction redundancy over the last link during a data transfer between an end user equipment and a remote network equipment is provided. The system includes at least one termination equipment having an application program and a connection oriented protocol stack including at least a physical layer, a MAC layer, an Ethernet layer, an internet protocol(IP) layer, a TCP layer and a transmission datagram protocol (TDP) layer; at least one end user equipment having an application program and a connection oriented protocol stack including at least a application layer and corresponding application programming interface (API), a physical layer, a link layer (e.g. Ethernet), an IP layer, and a non-reliable connection oriented transport layer (TDP); a network termination equipment connected with the end user equipment (the end user terminal) through an access network implementing a non-reliable transport protocol (TDP), and connected with a remote network equipment through a plurality of networks implementing a reliable transport protocol (TCP), for transferring the data.

According to one embodiment of the present invention, The TDP protocol is compliant with the TCP/UDP/IP paradigm and supports IP addressing and TCP/UDP port numbering.

According to one embodiment of the present invention, the TDP header is compliant with the UDP header. In order to implement the connection service, the length field shall have distinct meaning according to the following:

A value equal to zero corresponds to a connection request or connection response; a value equal to one corresponds to a disconnection request or disconnection response; a value greater than 8 corresponds to a data packet.

According to one embodiment of the present invention, an application programmable Interface (API), within the end user equipment, masks the existence of this new non-reliable connection oriented transport protocol (TDP). The end user application, within the end user equipment, transparently communicates through TDP whenever a connection oriented reliable transport protocol as TCP is required.

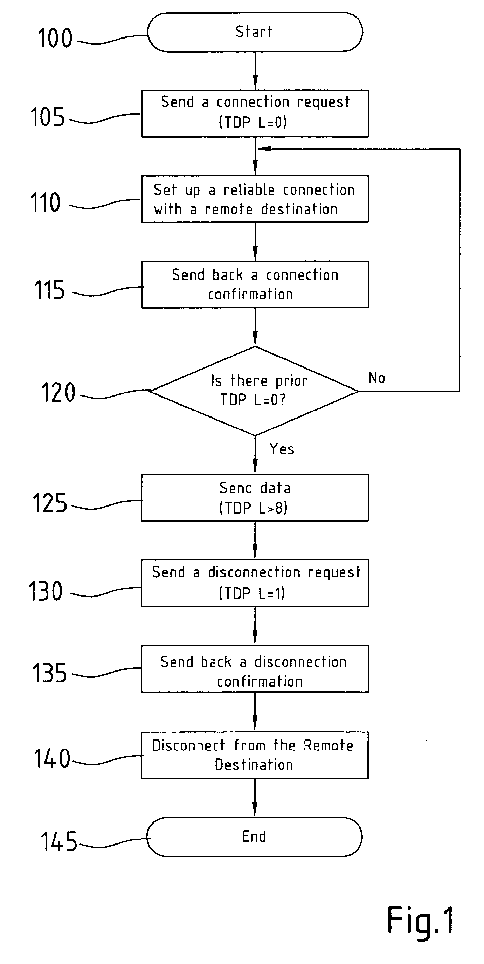

Fig. 1 depicts a method for avoiding error correction redundancy over the last link during a data transfer between an end user equipment and a remote network equipment using an intermediate equipment called network termination equipment and a non-reliable connection oriented transport protocol (TDP for Transport Datagram Protocol)over this last link. The method starts at step **100.** Then, the end user application program invoking the end user equipment to send a connection request (TDP L=0) to the termination equipment at step **105.** Responsive to the connection request, the termination equipment sets up a reliable transport protocol connection with a remote network equipment at step **110.** The termination equipment sends a connection confirmation (TDP L=0) back to the end user equipment at step **115.** The end user equipment sends data (TDP L>8) to the termination equipment at step **125.** Either the end user equipment or the remote network equipment may end a connection. As shown in Fig. 1, the remote network equipment initiates a disconnection. The termination equipment intercepts the request and sends a TDP disconnection request (TDP L=1) to the end user equipment at step **130.** The end user equipment sends a disconnection confirmation back to the termination equipment at step **135.** Responsive to the disconnection confirmation, the termination equipment terminates the connection with the remote network equipment according to the reliable end-to-end transport protocol (e.g. TCP) at step **140.** Finally, the method ends at step **145.**

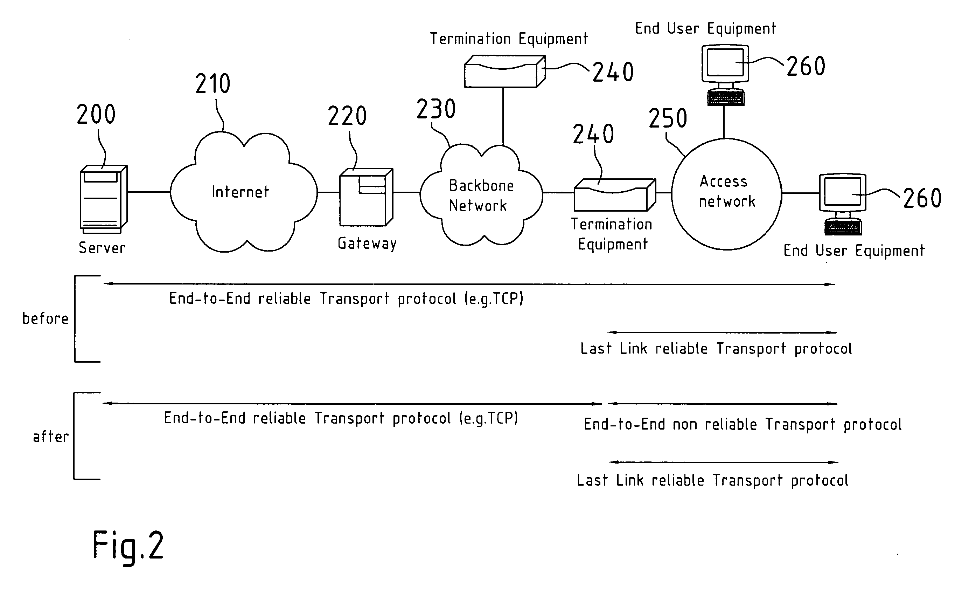

Fig. 2 depicts the kernel of the present invention implemented over a simplified network architecture composed with the Internet **210** (that is a set of interconnected networks) interconnected through a gateway **220** (usually owned by an ISP in case of a public network) with a backbone network **230.** As shown in Fig. 2, more than one end user equipment **260** could interconnect to the termination equipment **240** through the access network **250.** More than one termination equipment **240** could interconnect to the gateway **220** through backbone network **230.** The gateway **220** could interconnect to the remote network equipment, the server **200** through Internet **210.** The backbone network **230** could be the core network of a telecom operator or the core network of a LAN. The access of the backbone is done through one or several access networks **250. An** example of the access network **250** is based on one homogeneous technology. With a LAN context the access network **250** can be based on IEEE 802.11 WLAN, the termination equipment **240** could be a wireless base station. With a public WAN context, the access network can be also a WLAN or a fixed wireless network (IEEE802.16 WiMAX) or a wired public access network like Cable or xDSL, the termination equipment **240** being respectively a CMTS or a DSLAM. The figure shows the protocol relationship between the end user equipment **260,** the remote network equipment (i.e. the Server **200)** and the network termination equipment **240** before and after implementing our invention.

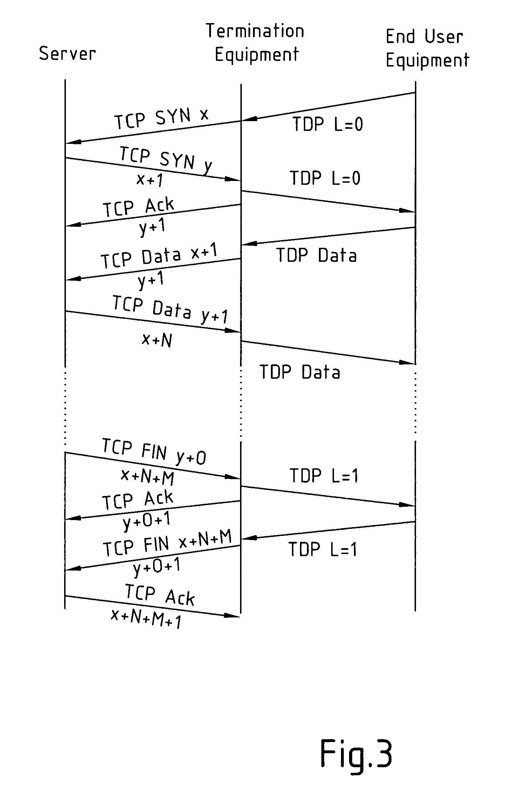

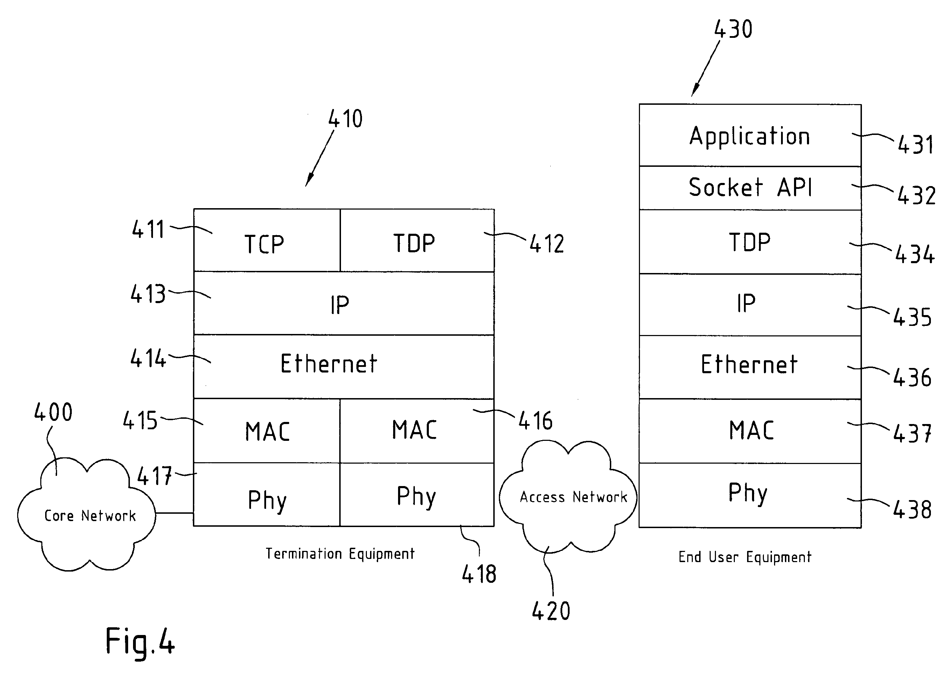

Fig. 4 is a schematic diagram showing the protocol stacks in the termination equipment **410** and in the end user equipment **430.** Regarding the end user equipment **430,** the TDP layer **434** instead of the TCP layer is used for connection oriented sessions crossing the termination equipment. TCP packets coming from the core network **400** are processed by the termination equipment and converted into TDP packets before going through the access network **420** as shown in Fig. 3. The protocol stack of the termination equipment **410** includes at least for each interface, a physical layer **(417, 418),** a link layer composed in the example with a Medium Access Control (MAC) layer **(415, 416)** and an Ethernet layer **414,** an internet protocol(IP) layer **413,** a TCP layer **411** and a transmission datagram protocol (TDP) layer **412.** The protocol stack of the end user equipment **430** includes at least an application layer **431** and corresponding application programming interface (API) **432,** a physical layer **438,** a link layer composed in the example with a MAC layer **437** and an Ethernet layer **436,** an IP layer **435,** and a TDP layer **434** for connection oriented transport.

While taking into concern of the main constraints of the new transport protocol are as below:
➢ Connection oriented: With TCP, there is a connection phase before the data packet exchange phase. The connection phase takes place normally between two applications each located in one of the two end equipments (i.e. the Server and the end User equipment). The main goal of a connection is to ensure that the application is indeed active. The connection can be an uplink connection or a downlink connection that comes respectively from the end user equipment or from the network (i.e. the server).
➢ Addressing: the new transport protocol needs to be compliant with the TCP/UDP/IP addressing paradigm (IP address + port number).

A new transport protocol is proposed, which fulfils the main constraints listed above. As an example, the proposed new transport protocol called TDP (Transmission Datagram Protocol) that is compliant with UDP (same header) but proposes a connection-oriented service as TCP. All TCP port numbers are valid. In a UDP packet, the length field gathers a value greater than 8 that correspond to the UDP header eight bytes size. We add the following semantic to the TDP length field:
● A packet with a null Length is a connection creation request/response packet;
● A packet with a length = 1 is a connection closing request/response.

The TDP packet is encapsulated into an IP packet. The IP header gathers a protocol type field for which a new value identifies the TDP transport protocol.

The last link also called the access network in one embodiment of the present invention is a home access network and it could be configured as wireless home access network or wired home access network.

Now, we specify the implementations in the termination equipment, in the end user equipment and the application behaviour/API respectively.

### In the termination equipment

Each new downlink (i.e. from the network towards the end user equipment) TCP connection request is accepted if the destination user equipment is present (i.e. there is always a mean to control the presence of the end user equipment) and if an application, in the end user equipment is listening the destination port embedded in the TCP connection request packet. In order to check whether the application is present, the termination equipment sends a TDP packet with a null length field and the source and destination port numbers copied from the TCP connection request packet. The end user equipment catches the packet and checks that there is a TCP listener corresponding to the TDP destination port number. If an application is present, the end user equipment sends back a TDP packet after having switched the source and destination port numbers else it does nothing and a timeout will be generated within the termination equipment.

In case of connection success, a TCP context is created in the termination equipment. Once a TCP packet comes from the network, the termination equipment associates the TCP packet with the corresponding TCP context based on the source and destination addresses (IP addresses and TCP port numbers). Data packets are reordered and forwarded over the last link (access network) towards the end user equipment using the non-reliable transport protocol TDP. The termination equipment for each TCP context handles TCP Acknowledgement.

When receiving a TDP packet from the end user equipment, the termination equipment associates the packet with the TCP session corresponding to the source and destination addresses. If the TDP packet is a connection request/response and no TCP context exists for the corresponding source and destination addresses, the termination equipment attempts to create a TCP connection with the remote network equipment (the Server in Fig. 2). If succeeded, the termination equipment sends back a TDP packet after having switched the source and destination port numbers else it does nothing; a timeout will be generated within the end-user equipment. If the TDP packet is a data packet it is converted into a TCP packet according to the corresponding TCP context and forwarded into the backbone network.

### In the end user equipment

The incoming TDP packet is processed through the physical, Link and Network layers. Note that the TDP packets can be carried directly over the MAC layer using a dedicated connection for instance. Whatever the way it is transported, the incoming TDP packets are intercepted by a software agent. The encapsulated data are delivered to the application through the TCP socket corresponding to the destination port number. The TDP protocol is masked to the application. The later communicates using TDP whenever an end-to-end connection oriented and reliable transport protocol (as TCP) is required.

For uplink transmission, the end user equipment catches the data and encapsulates them into a TDP packet and forwards it over the access network towards the termination equipment.

When an application creates a TCP socket, the end user equipment analyzes the destination IP address. If this address corresponds to a route that goes through the access network then the corresponding socket will be marked as indeed a TDP socket.

### Application behaviour and API

In the end user equipment, the application that needs to initiate a TCP connection or needs to wait for an incoming TCP connection uses the conventional API (as the BSD socket API). The Socket API software is modified in order to integrate a TDP agent that surveys TCP sockets associated with end points located behind the termination equipment (the destination IP address corresponds to the route going through the access network interface). The TDP agent converts a connection request into the corresponding TDP packet (Length = 0) and sends it over the access network interface. An incoming TDP packet is delivered up to the TDP agent. The TDP agent reacts according to the Length field of the header:
◆ L=0: this is a connection request or response. If there was no prior TDP sending with the length equal to zero then this is a connection request. The TDP agent checks that an application ha opened a TCP socket that corresponds to the source and destination addresses. If yes the agent sends back a TDP packet with the length field equal to 0. The packet corresponds to a connection confirmation. In that case the TDP agent signals to the application through the Socket API that the TCP connection is granted.
◆ L=1: This is a disconnection request or response. The TDP agent applies the same behaviour than for the connection.
◆ L>8: This is a data packet. The data packet is delivered to the application.

Whilst there has been described in the forgoing description preferred embodiments and aspects of the present invention, it will be understood by those skilled in the art that many variations in details of design or construction may be made without departing from the present invention. The present invention extends to all features disclosed both individually, and in all possible permutations and combinations.

## Claims

1. A method for avoiding error correction redundancy over the last link during a data transfer between an end user equipment and a remote network equipment, the end user equipment connecting to at least one network via a termination equipment, the last link being the network inter-connecting the end user equipment with the termination equipment, the termination equipment and the end user equipment each having at least one application program and at least one connection oriented protocol stack, the method including the steps of:
the end user application program invoking the end user equipment to send a connection request to the remote network equipment, wherein the connection request will be intercepted by the termination equipment;
responsive to the connection request, the termination equipment setting up a reliable transport protocol connection with the remote network equipment;
upon the reliable transport protocol connection being effective with the remote network equipment, the termination equipment sending a connection confirmation back to the end user equipment using the non-reliable transport protocol;
responsive to the connection confirmation, the end user equipment sending data using the connection oriented non-reliable transport protocol to the termination equipment;
the termination equipment forwarding the data towards the remote network equipment using the reliable transport protocol;
the end user equipment or the remote network equipment terminating the connection according to the connection oriented non-reliable transport protocol or the connection oriented reliable transport protocol respectively.

2. The method according to claim 1, wherein the connection oriented reliable transport protocol may be the Transmission Control Protocol (TCP) and the connection oriented non-reliable transport protocol over the link between the end user equipment and the termination equipment is a transport protocol, compliant with the User Datagram Protocol (UDP) further including a connection oriented service.

3. A system for avoiding error correction redundancy over the last link during a data transfer between an end user equipment and a remote network equipment, the end user equipment connecting to at least one network via a termination equipment, the system including:
at least one termination equipment;
at least one end user equipment;
at least one network;
wherein said termination equipment having at least one application program and at least two protocol stacks, wherein the stack for communicating with at least one network including at least a physical layer, a link layer, an internet protocol (IP) layer, a connection oriented reliable transport protocol layer and the stack for communicating with the end user equipment including at least one physical layer, a link layer, an internet protocol (IP) layer and a connection oriented non-reliable transport protocol layer;
wherein said end user equipment having an application program and a connection oriented protocol stack including at least an application layer, an application programming interface (API), a physical layer, a link layer, an IP layer, and a connection oriented non-reliable transport protocol layer; and
wherein said at least one network interconnecting the termination equipment and the end user equipment.

4. The system according to claim 5, wherein IP addresses and TCP port numbers are valid to said connection oriented non-reliable transport protocol layer.

5. The system according to claim 5, wherein said termination equipment communicates with the end user equipment through the connection oriented non-reliable transport protocol used over said at least one network.

6. The system according to claim 5, wherein said end user equipment masks the usage of the connection oriented non-reliable transport protocol into the application layer.

7. An end user equipment to be connected to a network, comprising:
a communication means for communicating with a remote network equipment on the network;
a memory, further comprising:
an application program for transferring the data to the remote network equipment;
a connection-oriented communication mechanism for receiving the data from the application program, and for establishing a non reliable connection to a termination equipment; and
a transport layer for transferring the data to the termination equipment; and
a processor for running the application program, the connection-oriented communication mechanism, and the transport layer.

8. A termination equipment, comprising:
at least one communication means for communicating with a device on the network, said device could be an end user equipment or a remote network device;
a memory, further comprising:
at least one application program for transferring the data from the end user equipment to the remote network equipment and vice versa;
at least one connection-oriented communication mechanism for receiving the data from the application program, for establishing a non reliable connection to the end user equipment, and for relaying the data from the end user equipment to the remote network equipment and vice versa; and
a transport layer for transferring the data from the end user equipment to the remote network equipment and vice versa; and
a processor for running the at least one application program, the at least one connection-oriented communication mechanism, and the transport layer.
